# EUROPÄISCHE PATENTSCHRIFT

(11) **EP 4 530 424 B1**
(45) Veröffentlichungstag und Bekanntmachung des Hinweises auf die Patenterteilung: **01.07.2026**
(21) Anmeldenummer: 25158828.1
(22) Anmeldetag: 08.02.2022
(51) Int. Cl.: E05B 83/10, B62D 33/037, E05B 47/06, E05B 13/10, G07C 9/00, E05B 47/00, E05B 53/00

(54) **MIT EINEM DREHSTANGENVERSCHLUSS AUSGEBILDETER KRAFTFAHRZEUGAUFBAU**
MOTOR VEHICLE STRUCTURE FORMED WITH A ROTARY BAR LOCK
STRUCTURE DE VÉHICULE AUTOMOBILE CONSTITUÉE D'UNE FERMETURE À BARRE ROTATIVE

(30) Priorität: 18.02.2021 DE 102021103886
(43) Veröffentlichungstag der Anmeldung: 02.04.2025
(62) Teilanmeldung aus: 22155602.0
(73) Patentinhaber: PWP SA, 1530 Payerne (CH)
(72) Erfinder: Klein, Claus, 58332 Schwelm (DE); Suer, Arne, 42859 Remscheid (DE)
(74) Vertreter: Müller, Enno

(56) Entgegenhaltungen:
- EP-A1- 1 908 901
- EP-A2- 0 839 977
- WO-A2-2007/095417
- BE-A1- 1 024 343
- US-A1- 2004 108 938
- US-A1- 2009 019 903
- US-A1- 2020 279 446

## Beschreibung

### Gebiet der Technik

Die Erfindung betrifft einen mit einem Drehstangenverschluss, insbesondere für Schwenktüren, ausgebildeten Kraftfahrzeugaufbau, wobei der Drehstangenverschluss in einer Verschlussstellung über ein mechanisches Blockierteil sicherbar ist, welches Blockierteil zwischen einer Blockierstellung und einer Freigabestellung bewegbar ist.

### Stand der Technik

Ein Drehstangenverschluss für einen Kraftfahrzeugaufbau ist beispielsweise aus der EP 0 953 496 B1 bekannt. Der Sperrvorsprung ist in dem Hebelteil an einem Schieberteil ausgebildet. Dieses Schieberteil wird im Zuge der Öffnungsbetätigung über den Betätigungshebel derart beaufschlagt, dass der Sperrvorsprung entgegen der Rückstellkraft einer Feder die Hintergreifstellung zu der Gegenrast verlässt.

Aus der WO 2007/095417 A2 ist eine Verriegelung für eine LKW-Tür bekannt, bei welcher ein Sperrelement mittels eines Schwenkhebels von einer verriegelten Stellung in eine unverriegelte Stellung entgegen einer Federkraft verstellbar ist.

Die US 2004/108938 A1 offenbart ein elektronisches Verriegelungssystem für Transport- und Lagercontainer, bei dem ein elektronisches Schloss den physischen Riegel eines Containers nur entriegelt, wenn hinterlegte Schlossdaten mit eingegebenen Daten übereinstimmen. Die Schlossdaten können Identifikationscodes oder GPS-Koordinaten sein und werden über ein Kommunikationsnetz zwischen Quellrechner und Schloss übertragen, wobei Öffnungszeitpunkt und Nutzerkennung beim Entriegeln zurückgesendet werden. Das System ermöglicht Standort- und Öffnungskontrolle, verhindert unberechtigtes Öffnen und reduziert das Risiko von Kontamination und Fehltransporten.

Die US 2020/279446 A1 offenbart ein System und Verfahren zur elektronischen Überwachung und Verriegelung beweglicher Frachtcontainer, bei dem ein elektronisches Tracking- und Monitoring-Modul mit GNSS- und terrestrischer Positionsbestimmung, dualen Mobilfunk-/IoT-Kommunikationseinheiten, Speicher und energieoptimierter Stromversorgung in ein elektronisches Schloss integriert ist und über Fahrzeug-Bus (z. B. CAN) und/oder Mesh-Netz mit weiteren Knoten sowie Backend-Servern zusammenwirkt.

Die EP 1 908 901 A1 offenbart eine Espagnolette für Türen von Lkw, Containern und ähnlichen Öffnungselementen, mit einem Steuer- und Verriegelungssystem aus Grundplatte, Betätigungshebel, Bedienhebel und einem Kipphebel, der den Riegel beim Schließen verriegelt und beim Öffnen freigibt. Die Sicherung erfolgt über integrierte Hemmmechanismen, die den Bedienhebel relativ zum Steuerhebel blockieren und den Kipphebel von außen abdecken, während der Kipphebel trotz Verriegelung von innen oder elektrisch betätigt werden kann.

Die EP 0 839 977 A2 offenbart einen Türgriff für Lkw- und Trailer-türen mit vereinfachter Sicherheitsbetätigung, der aus nur wenigen Komponenten besteht und ein Öffnen auch von innen ermöglicht. Der Griff umfasst zwei gelenkverbundene Gehäuseteile, eine federbelastete Raste, die durch Drehen des U-förmigen Griffteils gelöst wird, sowie ein Schließzylinder zur Verriegelung der Griffrotation. Zusätzlich ist eine Öffnung vorgesehen, durch die eine Entriegelung der Raste unabhängig von der Griffposition mittels eines Pins erfolgen kann.

Aus der US 2009/0019903 A1 ist eine Verriegelung für einen Container bekannt, bei welcher eine Schiebestange mittels eines Handgriffes aus einer verriegelten Stellung in eine unverriegelte Stellung zu bewegen ist. Bei geöffnetem Schloss kann eine Bewegung der Verriegelungsstange aus der Öffnungsstellung in die Verschlussstellung durch ein motorisch bewegbares Druckelement gehindert sein. Wenn das Schloss sich in der Verriegelungsstellung befindet muss das Druckelement heruntergefahren werden um eine Bewegung der Verriegelungsstange aus der Verschlussstellung in die Öffnungsstellung zu ermöglichen.

### Zusammenfassung der Erfindung

Ausgehend von dem vorbeschriebenen Stand der Technik stellt sich die Aufgabe, einen Kraftfahrzeugaufbau mit einem Drehstangenverschluss funktionssicher auszugestalten.

Die Lösung der Aufgabe ist dadurch gegeben, dass das Sperrteil durch das Blockierteil in der Raststellung blockierbar ist und dass das Blockierteil über eine Fernbetätigungseinrichtung, die eine Betätigung des Blockierteils ohne einen von Hand-Eingriff auf das Blockierteil ermöglichen lässt, betätigbar ist.

Das mit dem Drehstangenverschluss in der Verschlussstellung zusammenwirkende Blockierteil wird zufolge der vorgeschlagenen Lösung in vorteilhafter Weise nicht unmittelbar, insbesondere nicht unmittelbar von Hand, betätigt. Vielmehr ist diesbezüglich eine Fernauslösung bevorzugt. Hieraus ergeben sich insbesondere handhabungstechnische, darüber hinaus aber auch sicherungstechnische Vorteile.

Erst nach Fernauslösung zur Verlagerung des Blockierteils aus der Blockierstellung in die Freigabestellung kann der Drehstangenverschluss in eine Öffnungsstellung verlagert werden. Dabei kann die Fernauslösung gemäß einer weiter bevorzugten Ausbildung allein von einer hierzu berechtigten Person erfolgen.

Die Fernauslösung über die Fernbetätigungseinrichtung erfolgt mit örtlichem Abstand zu dem Blockierteil. Dabei kann sich dieser Abstand innerhalb der Erstreckung des Kraftfahrzeugs, insbesondere des Kraftfahrzeugaufbaus, ergeben, gegebenenfalls aber auch außerhalb des Kraftfahrzeugs. So kann weiter die Fernbetätigungseinrichtung in oder an dem Kraftfahrzeugaufbau vorgesehen sein, alternativ aber auch als ein von dem Kraftfahrzeugaufbau unabhängiges, gegebenenfalls mobiles, weiter insbesondere tragbares Teil.

So kann gemäß einer Weiterbildung des Erfindungsgegenstandes vorgesehen sein, dass der Sperrvorsprung unter einer Abdeckung des Hebelteils angeordnet ist. Der Sperrvorsprung ist entsprechend bevorzugt in einer von außen nicht oder zumindest nicht unmittelbar zugänglichen Position in dem Hebelteil angeordnet, ist hierdurch insbesondere vor einer möglichen Manipulation geschützt. Auch kann durch die Abdeckung der Sperrvorsprung vor einer übermäßigen Verschmutzung geschützt sein. Die Funktionssicherheit des Sperrvorsprungs ist erhöht.

Der Sperrvorsprung kann in der Sperrstellung und/oder in der die Gegenrast freigebende Stellung von der Abdeckung überdeckt sein. Bevorzugt ist diesbezüglich weiter eine Ausgestaltung, bei welcher der Sperrvorsprung über einen gesamten Verschiebeweg und somit in jeder Verlagerungsstellung von der Abdeckung überdeckt ist.

Weiter kann die Gegenrast in der unbetätigten und/oder betätigten Stellung auf der von dem Aufbau abgewandten Seite der Drehachse von dem Einwirkungsabschnitt überdeckt sein. Es kann sich insbesondere in der unbetätigten Raststellung eine schützende Überdeckung der Gegenrast durch den Einwirkungsabschnitt ergeben. Mit Bezug auf die Drehachse des Betätigungshebels kann die Gegenrast dem Einwirkungsabschnitt im Drehweg stehen.

Auch die Gegenrast kann in der unbetätigten und/oder der betätigten Stellung von der Abdeckung des Drehstangenverschlusses überdeckt sein. Weiter bevorzugt ergibt sich diese Überdeckung in jeder Betätigungsstellung des Betätigungshebel beziehungsweise des Hebelteils insgesamt.

Die Überdeckung der Gegenrast und/oder des Sperrvorsprungs durch die Abdeckung ergibt sich weiter insbesondere mit Bezug auf eine Projektion der Abdeckung und der Gegenrast beziehungsweise des Sperrvorsprungs in eine im Wesentlichen parallel zu der Abdeckung ausgerichteten Projektionsebene.

Der schiebeverlagerbare Sperrvorsprung kann in die Raststellung federbelastet sein. Durch Betätigung des Betätigungshebel und damit einhergehender Einwirkung des Einwirkungsabschnittes auf den Vorsprung wird der Sperrvorsprung entgegen der Belastung der Feder in eine Stellung schiebeverlagert, in welcher die Gegenrast freigegeben wird. Der Drehstangenverschluss ist hiernach relativ zu dem die Gegenrast tragenden Aufbau schwenkverlagerbar.

Die Raststellung kann darüber hinaus in vorteilhafter Weise blockierbar sein. Entsprechend ist zum Verschwenken des Betätigungshebels zur Einwirkung auf den Sperrvorsprung bevorzugt zunächst eine Aufhebung der Blockierung vorzunehmen. Es ergibt sich entsprechend eine doppelte Sicherung des Drehstangenverschlusses, so zum einen durch die Zusammenwirkung von Sperrvorsprung und Gegenrast und zum anderen durch die vorbeschriebene Blockierung.

Die Blockierung kann beispielsweise nur durch eine berechtigte Person aufgehoben werden. Diese berechtigte Person kann eine andere Person sein als die, die den Drehstangenverschluss bedient.

Zur Blockierung des Sperrvorrichtung ist ein zwischen einer Blockierstellung und einer Freigabestellung bewegbares Blockierteil vorgesehen. Beispielsweise kann es sich diesbezüglich um einen Bolzen oder Riegel handeln, welcher gezielt, ohne einen unmittelbaren von Hand-Eingriff, verlagerbar ist. Eine solche Verlagerung kann weiter beispielsweise entgegen der Kraft einer das Blockierteil insbesondere in die Blockierstellung belastenden Feder erfolgen.

In einer möglichen Ausgestaltung kann das Blockierteil in oder an dem Hebelteil ausgebildet beziehungsweise angeordnet sein, sodass das Blockierteil mit Verschwenken des Hebelteils zum Öffnen des Drehstangenverschlusses mitverschwenkt wird.

In bevorzugter Ausgestaltung ist das Blockierteil jedoch aufbaufest. So kann das Blockierteil beispielsweise chassisseitig des Kraftfahrzeugaufbaus angeordnet sein, weiter beispielsweise in einem zugleich auch die Gegenrast aufweisenden Bereich. Das Blockierteil verbleibt entsprechend mit Verschwenken des Hebelteils an dem Kraftfahrzeugaufbau.

Das Blockierteil kann motorisch bewegbar sein. Weiter beispielsweise kann diesbezüglich eine elektromotorische Bewegbarkeit des Blockierteils vorgesehen sein, gegebenenfalls aber auch alternativ oder kombinativ eine elektromagnetische, hydraulische oder pneumatische Bewegbarkeit.

In vorteilhafter Weise ist das Blockierteil über eine Funkverbindung steuerbar. Diesbezüglich kann es sich beispielsweise um eine Bluetooth-Verbindung handeln.

Weiter bietet sich eine Fernbetätigungseinrichtung an, welche als elektrische Schalteinrichtung ausgebildet ist. Über diese elektrische Schalteinrichtung kann ein elektrischer Impuls zur beispielsweise elektromotorischen Steuerung des Blockierteils aus der Blockierstellung in die Freigabestellung ausgelöst werden.

Auch kann die Fernbetätigungseinrichtung als Funkfernbedienung ausgebildet sein. Dabei kann es sich um einen gesondert ausgebildeten, handbetätigbaren Funk-Sender handeln, über welchen per Funk, beispielsweise Bluetooth, ein Signal zur Verlagerung des Blockierteils übermittelt wird. Das Blockierteil beziehungsweise der das Blockierteil verlagernde Aktuator (beispielsweise Elektromotor) ist hierzu mit einem entsprechend angepassten Funk-Empfänger versehen.

Der Funk-Sender kann gemäß einer weiter möglichen Ausgestaltung durch ein Smartphone oder dergleichen gegeben sein, welches mit einer entsprechenden Software (App) versehen zur Signalübertragung, gegebenenfalls zur bidirektionalen Kommunikation mit dem Funk-Empfänger, dienen kann. Bei einer bidirektionalen Kommunikation kann beispielsweise auf dem Display des Smartphones eine Rückmeldung erfolgen, dass das Blockierteil ordnungsgemäß in die Freigabestellung verlagert ist. Auch kann unter Nutzung eines solchen Smartphones mit der entsprechenden Software eine Protokollierung der Blockierteil-Betätigungen vorgenommen werden.

Darüber hinaus kann die Fernbetätigungseinrichtung auch als mechanische Einrichtung, beispielsweise in Form eines Bowdenzugs, ausgebildet sein. Auch über eine solche mechanische Einrichtung, welche beispielsweise auch durch ein Gestänge gebildet sein kann, ist eine örtlich zu dem Blockierteil beabstandete Betätigung des Blockierteils ermöglicht.

Eine derartige mechanische Einrichtung kann weiter beispielsweise zusätzlich zu einer Funkfernbedienung vorgesehen sein. Die Funkfernbedienung bietet dabei eine bedienungsfreundliche Auslösung des Blockierteils, während die zusätzlich vorgesehene mechanische Einrichtung insbesondere für den Fall vorgesehen ist, dass beispielsweise die vorgesehene Funkverbindung ausfällt.

### Kurze Beschreibung der Zeichnung

Nachstehend ist die Erfindung anhand der beigefügten Zeichnung erläutert, die aber lediglich Ausführungsbeispiele darstellt. Ein Teil, das nur bezogen auf eines der Ausführungsbeispiele erläutert ist und bei einem weiteren Ausführungsbeispiel aufgrund der dort herausgestellten Besonderheit nicht durch ein anderes Teil ersetzt ist, ist damit auch für dieses weitere Ausführungsbeispiel als jedenfalls mögliches vorhandenes Teil beschrieben. Die Zeichnung zeigt:
- Fig. 1: die Ansicht gegen eine zweiflügelige Schwenktür eines Kraftfahrzeugaufbaus mit mehreren Drehstangenverschlüssen;
- Fig. 2: die Herausvergrößerung des Bereiches II in Figur 1, betreffend eine erste Ausführungsform eines Drehstangenverschlusses;
- Fig. 3: die Ansicht gegen den Drehstangenverschluss gemäß Pfeil III in Figur 2;
- Fig. 4: den Drehstangenverschluss in perspektivischer Darstellung;
- Fig. 5: den Schnitt gemäß der Linie V-V in Figur 2, die Verschlussstellung des Drehstangenverschlusses betreffend;
- Fig. 6: die Herausvergrößerung des Bereiches VI in Figur 5;
- Fig. 7: eine der Figur 5 entsprechende Schnittdarstellung, die Entriegelungsstellung betreffend, mit in strichpunktierter Linienart wiedergegebener Verschwenkstellung eines Hebelteils;
- Fig. 8: die Herausvergrößerung des Bereiches VIII in Figur 6;
- Fig. 9: eine der Figur 6 entsprechende Vergrößerungsdarstellung; eine zweite Ausführungsform des Drehstangenverschlusses betreffend;
- Fig. 10: eine der Figur 9 im Wesentlichen entsprechende Darstellung, jedoch die Entriegelungsstellung betreffend nach Aufhebung einer zusätzlichen Blockierung.

### Beschreibung der Ausführungsformen

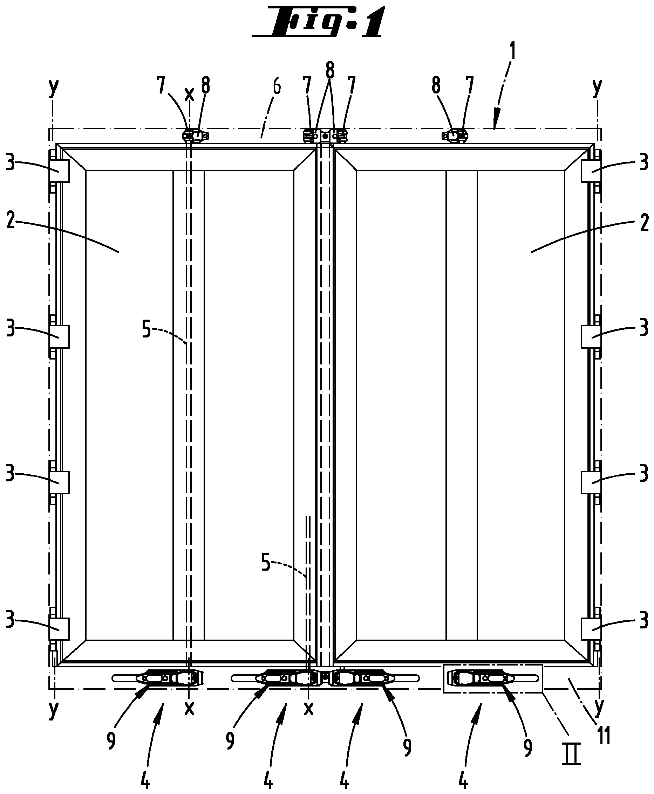

Dargestellt und beschrieben ist, zunächst mit Bezug zu Figur 1, ein Kraftfahrzeugaufbau 1. Der umschlossene Laderaum ist zugängig über zwei Schwenktüren 2, die in Art einer Doppelflügeltür angeschlagen sind.

Die beiden Schwenktüren 2 sind im Übergangsbereich zu den Längswänden des Kraftfahrzeugaufbaus 1 anscharniert. Es sind mehrere Scharniere 3 vorgesehen, so zugeordnet einer jeden Schwenktür 2 beispielsweise vier bevorzugt gleichmäßig in Vertikalrichtung zueinander beabstandet angeordnete Scharniere 3.

Zum Verschließen und Öffnen der Schwenktüren 2 dienen Drehstangenverschlüsse 4. Bestandteil eines jeden Drehstangenverschlusses 4 ist eine das Blatt beziehungsweise den Flügel der zugeordneten Schwenktür 2 vertikal drehgeführt durchragende Drehstange 5. Diese Drehstange 5 geht im Bereich der Decke 6 des Kraftfahrzeugaufbaus 1 in einen Drehriegel 7 über. Dieser ist mit der Drehstange 5 drehfest verbunden und greift verschließend in eine Aufnahmetasche 8 im Bereich der Decke 6 ein.

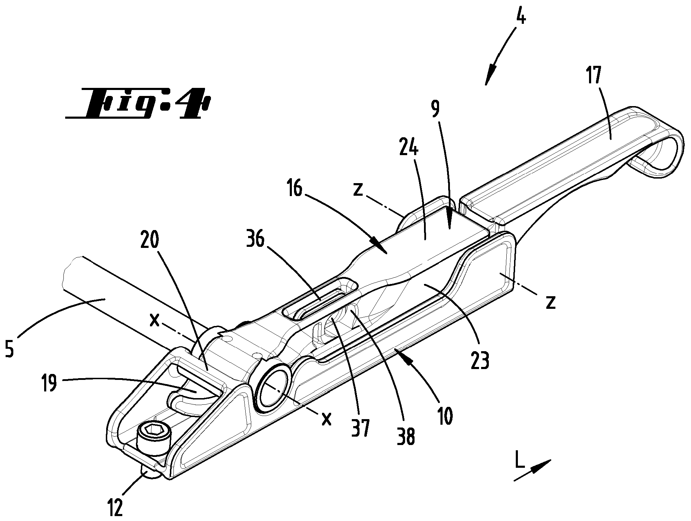

Die Drehbetätigung der Drehstange 5 wird über ein Hebelteil 9 erreicht. Dieses sitzt bevorzugt unterhalb eines nicht näher dargestellten Ladebodens des Kraftfahrzeugaufbaus 1 am unteren Ende der zugeordneten Drehstange 5 und ist im Verschlusszustand gemäß den Darstellungen in den Figuren 1 bis 5 sowie 9 mit einer Grundplatte 10 verrastet.

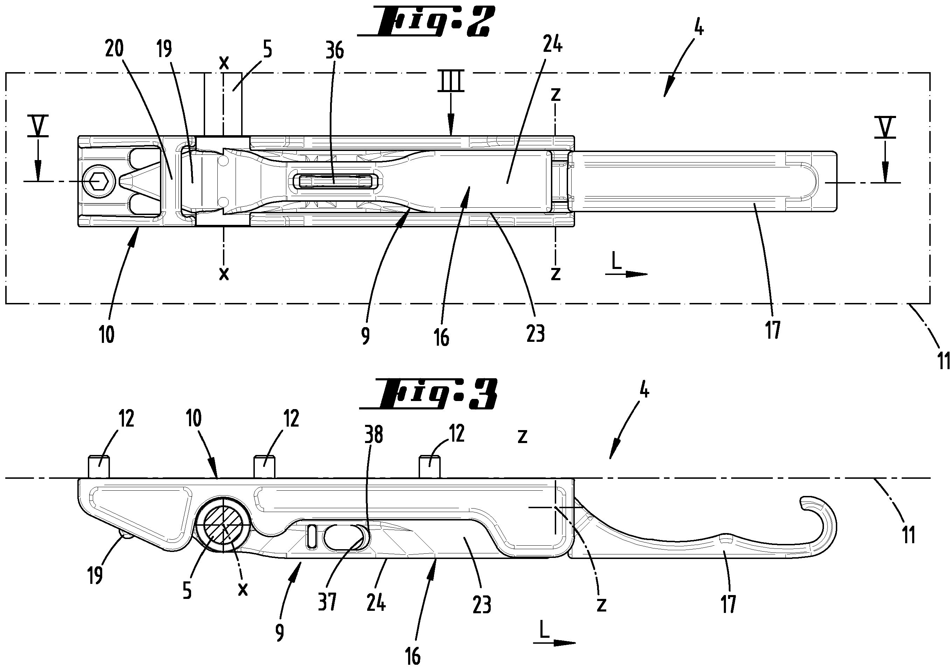

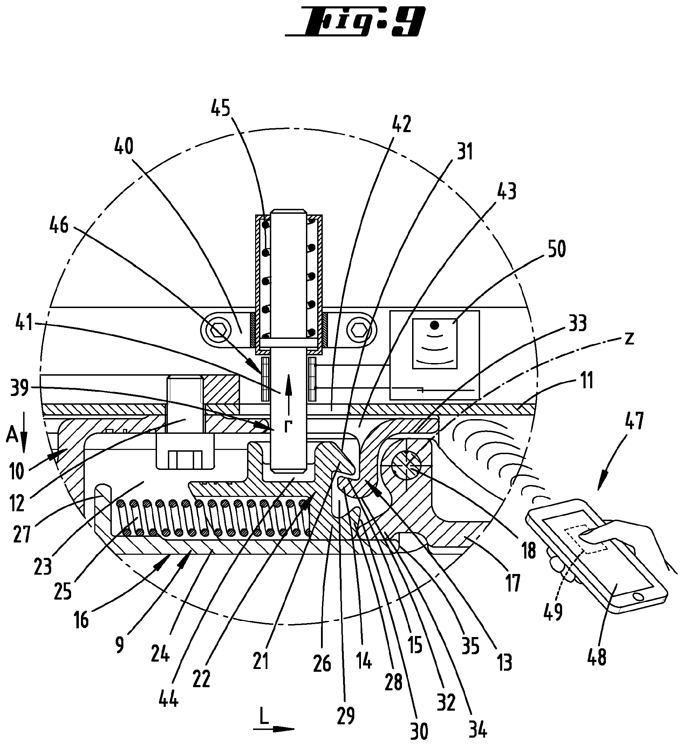

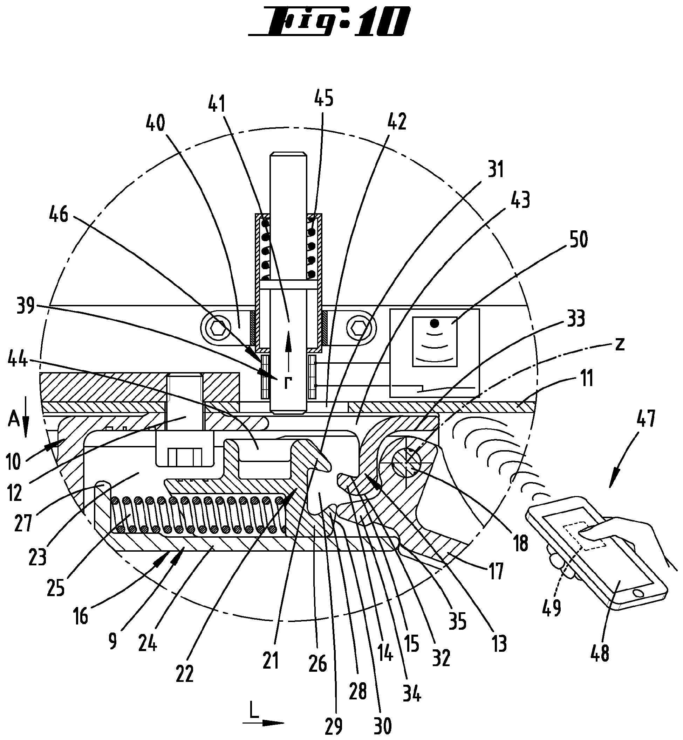

In den Figuren 2 bis 8 ist ein Grundaufbau des vorliegenden Drehstangenverschlusses 4 gezeigt, um dessen Wirkprinzip zu erklären. Der erfindungsgemäße Drehstangenverschluss 4 ist in den Figuren 9 und 10 gezeigt.

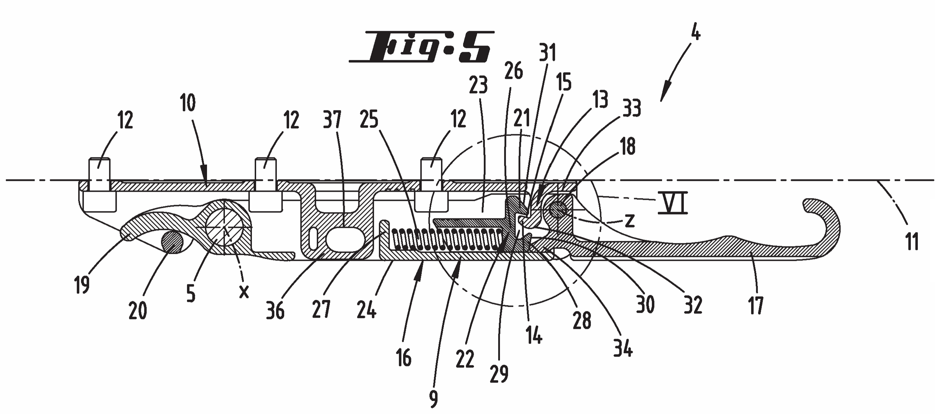

Die Grundplatte 10 ist türaußenseitig, beispielsweise über Schraubbolzen 12, an einem aufbauseitigen Rahmenelement 11 des Kraftfahrzeugaufbaus 1 befestigt (vergleiche beispielsweise Figur 5). Alternativ zu einer Verschraubung kann auch eine Verschweißung genutzt sein zur Festlegung der Grundplatte 10 an dem Rahmenelement 11.

Teil der Grundplatte 10 ist eine in der Raststellung des Drehstangenverschlusses 4 mit dem Hebelteil 9 zusammenwirkende Gegenrast 13. Der in der Raststellung wirksame Rastvorsprung 14 der Gegenrast 13 weist mit dessen wirksamen, in der Raststellung übergriffenen Rastfläche in Richtung auf das Rahmenelement 11, wobei weiter diese Rastfläche 15 im Wesentlichen in einer Richtung A senkrecht zu dem Rahmenelement 11 beziehungsweise der im Befestigungsbereich an dem Rahmenelement 11 im Wesentlichen flächig und plattenartig ausgebildeten Grundplatte 10 zu der zugewandten Außenfläche des Rahmenelementes 11 sowie auch der Grundplatte 10 beabstandet ist.

Das Hebelteil 9 setzt sich weiter im Wesentlichen zusammen aus einem Sockelbereich 16 und einem Betätigungshebel 17. Bevorzugt ist der Betätigungshebel 17 an dem Sockelbereich 16 um eine Drehachse 18 schwenkbeweglich gehaltert.

Der Sockelbereich 16 ist drehfest mit der Drehstange 5 verbunden, deren geometrische Drehachse x sich senkrecht zu einer Längserstreckung des Hebelteils 9 erstreckt. Diese Längserstreckung des Hebelteils 9 ist zumindest in der Sperrstellung des Drehstangenverschlusses 4 quergerichtet zur Schwenkachse y der Schwenktüren 2 und somit in üblicher Nutzungsstellung zumindest annähernd in horizontaler Richtung weisend.

Die Drehstange 5 ist in einem Endbereich bezüglich der Längserstreckung des Hebelteils 9 beziehungsweise des Sockelbereichs 16 angeordnet. Weiter zugeordnet diesem Endbereich ist an dem Sockelbereich 16 in Richtung auf die Schwenktür 2 weisend ein freikragender Riegelfortsatz 19 starr angebunden. Dieser Riegelfortsatz 19 hintergreift in der Raststellung einen an der Grundplatte 10 gehalterten Anlagezapfen 20. Wie beispielsweise aus der Figur 5 zu erkennen, verläuft der Riegelfortsatz 19 in dieser Verschlussstellung mit der dem Anlagezapfen 20 zugewandten Randkante annähernd entlang einer Kreislinie folgend.

In dem Sockelbereich 16 ist weiter bevorzugt ein in Längsrichtung L des Hebelteils 9 schiebeverlagerbarer Sperrvorsprung 21 angeordnet. Dieser Sperrvorsprung 21 ist Teil eines in dem Sockelbereich 16 geführten Sperrteils 22, welches beidseitig durch sockelseitige Wandungen 23 und gemäß Figur 5 gegenüberliegend zu der Grundplatte 10 durch eine Abdeckung 24 überdeckt ist. Die Wandungen 23 und die Abdeckung 24 umfassen das Sperrteil 22 im Wesentlichen U-förmig.

Die Grundplatte 10 kann, wie weiter insbesondere auch aus der Schnittdarstellung in Figur 5 zu erkennen, einen in diesen durch die Abdeckung 24 und die Wandungen 23 U-förmig gebildeten Raum des Sockelbereichs 16 eintauchenden Brückenabschnitt 36 ausbilden. Dieser Brückenabschnitt 36 kann eine Durchgreiföffnung 37 aufweisen, die in der Raststellung, beispielsweise gemäß Figur 5, in seitlicher Überdeckung ist zu Öffnungen 38 in den Wandungen 23. Diese Öffnungen 38 des insgesamt abschwenkbaren Hebelteils 9 und die Durchgreiföffnung 37 der aufbaufesten Grundplatte 18 können in der Raststellung beispielsweise genutzt sein zur Anordnung einer Sicherung, beispielsweise einer Zoll-Sicherung.

Das Sperrteil 22 ist in eine Richtung wegweisend zu dem Riegelfortsatz 19 federbelastet. Die hierzu vorgesehene Feder 25 kann gemäß den dargestellten Ausführungsbeispielen eine Zylinder-Druckfeder sein, welche sich im Bereich eines Endes an einer quer zu einer Längsrichtung L gerichteten Verlagerungsrichtung des Sperrteils 22 ausgerichteten Schulter 26 abstützt. Das andere Ende der Feder 25 findet dabei eine Basisabstützung an einem von der Abdeckung 24 in Richtung auf die Grundplatte 10 (bezogen auf die Raststellung) abgewinkelten Stützabschnitt 27.

Die den Sperrvorsprung 21 endseitig tragende Schulter 26 des Sperrteils 22 formt weiter einen Steuerabschnitt 28 aus. Sperrvorsprung 21 und Steuerabschnitt 28 sind insbesondere mit Bezug auf einen Längsschnitt gemäß Figur 5 durch das Hebelteil 9 im Wesentlichen gegenüberliegend im Bereich der Enden der Schulter 26 ausgebildet, wobei weiter die jeweiligen freien Endbereiche von Sperrvorsprung 21 und Steuerabschnitt 28 im Wesentlichen tendenziell aufeinander zuweisend ausgebildet sind. In eine sich zwischen dem Steuerabschnitt 28 und dem Sperrvorsprung 21 formende Tasche 29 des Sperrteils 22 taucht in der Raststellung der Rastvorsprung 14 der Gegenrast 13 ein.

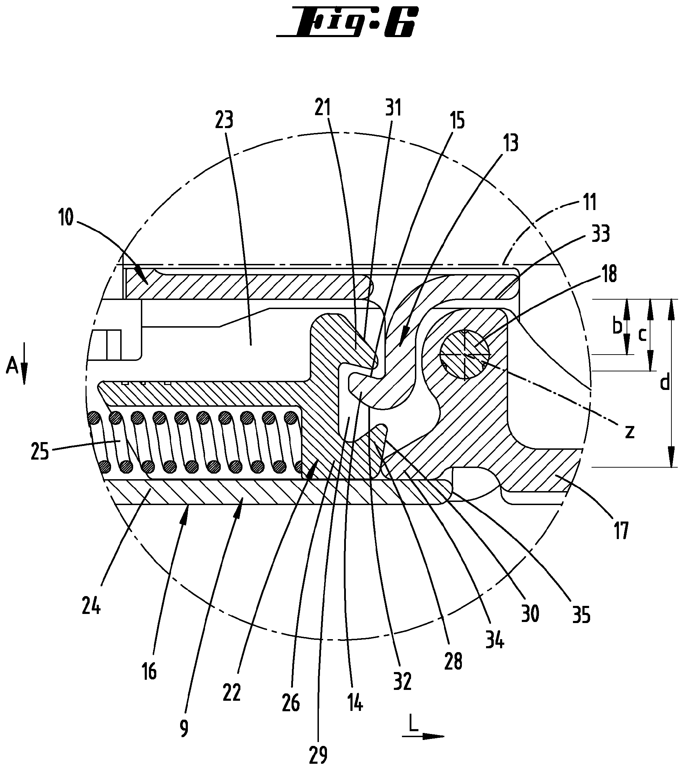

Der Steuerabschnitt 28 kann unterseitig der Abdeckung 24 des den Sockelbereich 16 mitbildenden Gehäuses gegebenenfalls sich dort abstützend geführt sein. Die von der Feder 25 abweisende, entsprechend in Richtung auf den Betätigungshebel 17 weisende Stirnfläche 30 des Steuerabschnitts 28 ist bevorzugt als steuernde Schrägfläche ausgebildet, die mit Bezug auf eine Schnittdarstellung, beispielsweise gemäß Figur 6, ausgehend von dem der Abdeckung 24 zugewandten Endbereich im Wesentlichen in Richtung auf den Betätigungshebel 17 ansteigt.

Auch der Sperrvorsprung 21 ist mit einer Steuerschräge 31 versehen, die im Zuge einer Schwenkrückverlagerung des Hebelteils 9 in die Raststellung mit einer Gegenrastfläche 32 der Gegenrast 13 steuernd zusammenwirkt, sodass das Sperrteil 22 entgegen der Rückstellkraft der Feder 25 zurückverlagert wird und somit den Rastvorsprung 14 der Gegenrast 13 überlaufen kann. Das Sperrteil 22 fällt abschließend mit dem Sperrvorsprung 21 selbsttätig zufolge Druckbeaufschlagung über die Feder 25 zurück in die den Rastvorsprung 14 der Gegenrast 13 hintergreifende Raststellung gemäß den Figuren 5 und 6.

Abgewandt dem Sperrteil 22 ist im Wesentlichen rückwärtig der Gegenrast 13 die Drehachse 18 angeordnet. Diese kann im Wesentlichen im Bereich der Wandung 23 des Sockelbereichs 16 gelagert sein.

Die geometrische Achse z der Drehachse 18 ist bevorzugt zu der zugewandten, im Wesentlichen parallel zu dem Rahmenelement 11 verlaufenden Fläche 33 der Grundplatte 10 beabstandet, welcher Abstand b bevorzugt kleiner gewählt ist als der geringste Abstand c zwischen der wirksamen Rastfläche 15 der Gegenrast 13 und der vorbezeichneten Fläche 33 der Grundplatte 10. So kann der Abstand c beispielsweise etwa dem 1,2- bis 2-Fachen des Abstandes b entsprechen, weiter beispielsweise etwa dem 1,3- bis 1,5-Fachen.

Weiter zu dieser vorbeschriebenen Fläche 33 der Grundplatte 10, mit einem Abstand d versehen, ist an dem Betätigungshebel 17 ein Einwirkungsabschnitt 34 ausgebildet. Dieser Einwirkungsabschnitt 34 ist an dem Betätigungshebel 17 bezüglich der Drehachse 18 in einem Bereich gegenüberliegend zu der Grundplatte 10 beziehungsweise des Rahmenelements 11 ausgebildet. Der sich dabei ergebende Abstand d zu der Fläche 33 kann etwa dem 1,5- bis 2,5-Fachen, weiter etwa dem 2-Fachen des geringsten Abstandes c zwischen der Fläche 33 und der Rastfläche 15 entsprechen.

Der Einwirkungsabschnitt 34 ist bevorzugt in jeder Schwenkstellung des Betätigungshebels 17 von der Abdeckung 24, insbesondere in einer Richtung A senkrecht zur Ausrichtung der Abdeckung 24, überdeckt.

Weiter bietet die zugewandte Innenfläche der Abdeckung 24 einen Anschlag für den Einwirkungsabschnitt 34, womit zudem ein Anschlag für den Betätigungshebel 17 insgesamt in der Verschlussstellung gegeben ist.

Der Einwirkungsabschnitt 34 ist ausgelegt zur Zusammenwirkung mit dem Steuerabschnitt 28 des Sperrteils 22, insbesondere mit der diesbezüglichen Stirnfläche 30 des Steuerabschnitts 28.

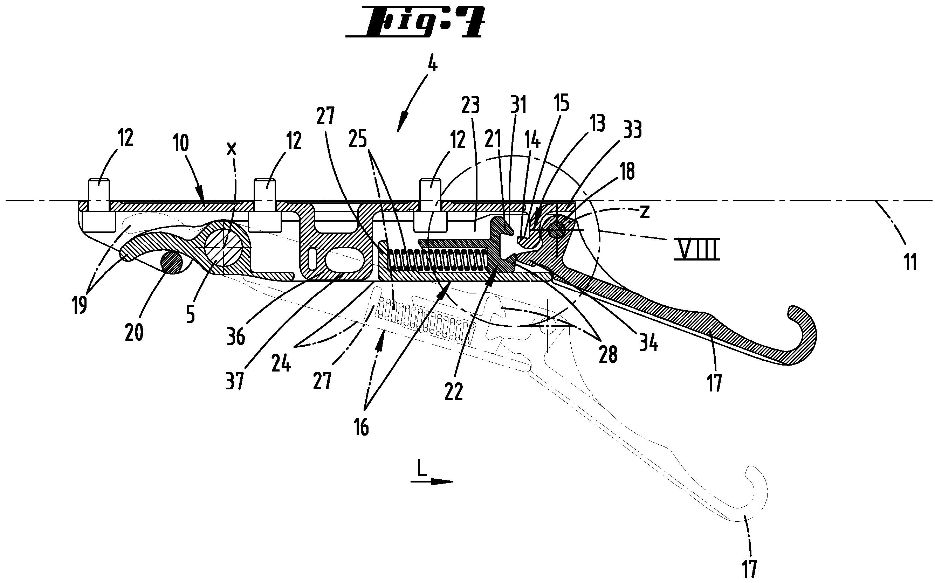

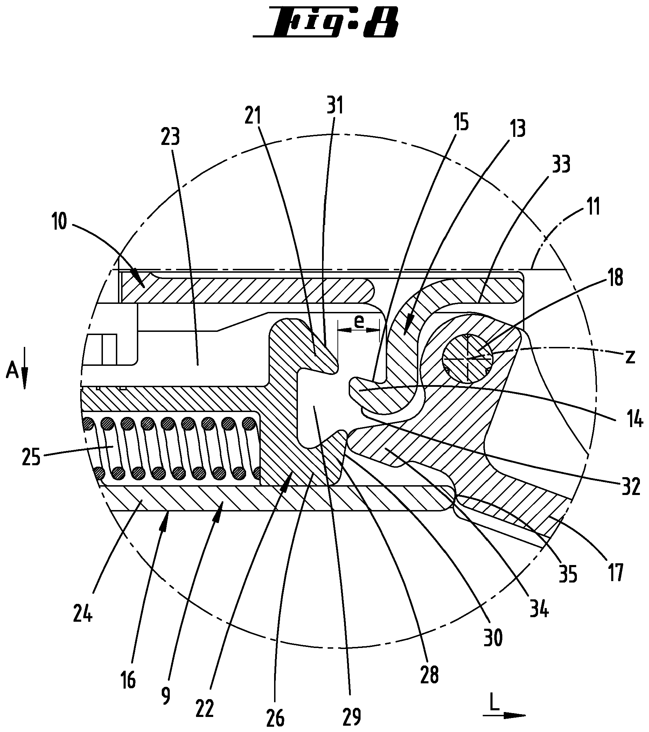

Zur Aufhebung der in den Figuren 1 bis 6 dargestellten Raststellung des Drehstangenverschlusses 4 wird der Betätigungshebel 17 um dessen Drehachse 18 verschwenkt, derart, dass der an dem Betätigungshebel 17 drehfest angebundene Einwirkungsabschnitt 34 aussteuernd entlang der sich an diesem Einwirkungsabschnitt 34 abstützenden Stirnfläche 30 des Steuerabschnitts 28 bewegt. Das Sperrteil 22 wird dabei entgegen der Rückstellkraft der Feder 25 zunehmend in eine sich - in Längsrichtung L betrachtet - zu der Drehachse 18 distanzierende Position verlagert, wobei der Sperrvorsprung 21 des Sperrteils 22 die Hintergriffstellung zu der Gegenrast 13, insbesondere dessen Rastvorsprung 14 verlässt. In dieser Rast-Aufhebungsstellung, wie dies in den Figuren 7 und 8 dargestellt ist, ist das gesamte Hebelteil 9 um die geometrische Drehachse x der Drehstange 5 verschwenkbar (siehe strichpunktierte Darstellung in Figur 7).

Das Sperrteil 22, insbesondere der Sperrvorsprung 21, ist dabei über den gesamten sich ergebenden Verschiebeweg e (vergleiche Figur 8) von der Abdeckung 24 überdeckt.

Die Verschwenkung des Betätigungshebels 17 zur Aussteuerung des Sperrteils 22 ist bevorzugt anschlagbegrenzt. Diese Begrenzung ergibt sich bevorzugt durch Anschlagen eines Betätigungshebel-Abschnitts gegen die zugewandte Stirnfläche 35 der Abdeckung 24 (vergleiche insbesondere Figur 8).

Über die steuerflächenartige Stirnfläche 30 des Steuerabschnitts 28 ist der Einwirkungsabschnitt 34 und hierüber der Betätigungshebel 17 insgesamt in Richtung auf die Grundstellung gemäß Figur 5 und 6 federbelastet.

Die Figuren 9 und 10 zeigen die erfindungsgemäße Ausführungsform des Drehstangenverschlusses 4, dabei im Wesentlichen aufbauend auf einem Hebelteil 9 gemäß der vorbeschriebenen ersten Ausführungsform.

Das Sperrteil 22, so entsprechend insbesondere der Sperrvorsprung 21, ist in der Raststellung durch ein Blockierteil 39 blockierbar. Gemäß dem dargestellten Ausführungsbeispiel ist das Blockierteil 39 bolzenartig gestaltet und in einer Verlagerungsrichtung r quer zur Längsrichtung L zwischen einer Blockierstellung und einer Freigabestellung bewegbar.

Das Blockierteil 39 ist bevorzugt aufbaufest vorgesehen, so weiter beispielsweise im Bereich des Rahmenelementes 11 befestigt. Beispielsweise kann hierzu eine Befestigungslasche 40 vorgesehen sein.

Der Blockierbolzen 41 des Blockierteils 39 durchsetzt dabei bevorzugt eine Öffnung 42 in dem Rahmenelement 11 sowie eine entsprechend positionierte Durchbrechung 43 in der Grundplatte 10 und taucht in der Blockierstellung gemäß Figur 9 in eine beispielsweise topfartige Blockierausnehmung 44 des Sperrteils 22 ein. In dieser Stellung hindert der Blockierbolzen 41 des Blockierteils 39 das Sperrteil 22 an einer Schiebeverlagerung in Richtung auf eine die Gegenrast 13 freigebende Stellung. Entsprechend ist die Raststellung des Hebelteils 9 gemäß der anhand des ersten Ausführungsbeispiels beschriebenen Vorgehensweise nur ermöglicht, wenn zuvor das Blockierteil 39 in eine das Sperrteil 22 zur Verlagerung freigebende Stellung bewegt ist.

Dabei kann weiter der Blockierbolzen 41 des Blockierteils 39 beispielsweise durch eine Feder 45, weiter beispielsweise durch eine Zylinder-Druckfeder, die sich aufbauseitig abstützt, in die Blockierstellung gemäß Figur 9 belastet sein. Zur Aufhebung der Blockierstellung ist der Blockierbolzen 41 entsprechend entgegen der Rückstellkraft der Feder 45 in Richtung r zu verlagern.

Diese Rückverlagerung kann motorisch, insbesondere elektromotorisch erfolgen, darüber hinaus aber auch hydraulisch oder pneumatisch. Dargestellt ist eine mögliche Lösung unter Nutzung eines Elektro-Stellmagneten 46, der im Wesentlichen den Blockierbolzen 41 ringartig umfasst. Durch entsprechende Ansteuerung des Stellmagneten 46 ist der Blockierbolzen 41 entgegen der Kraft der Feder 45 in eine das Sperrteil 22 freigebende Stellung gemäß Figur 10 verlagerbar.

Die Betätigung des Blockierteils 39, gemäß dem dargestellten Ausführungsbeispiel zufolge Aktivierung des Stellmagneten 46, erfolgt über eine Fernbetätigungseinrichtung 47, die eine Betätigung des Blockierteils 39 ohne einen von Hand-Eingriff auf das Blockierteil 39 selbst ermöglichen lässt.

Bei der Fernbetätigungseinrichtung 47 kann es sich, wie dargestellt, um eine Funkfernbedienung 48 handeln, weiter beispielsweise in Form eines mit einer entsprechenden Software (App) versehenen Smartphones. Eine solche Funkfernbedienung 48 verfügt bevorzugt über einen Sender 49, über welchen ein entsprechendes Steuersignal zur Ansteuerung beispielsweise des Stellmagneten 46 an einen Empfänger 50 übertragen wird. Der Empfänger 50 kann weiter mit einem das Steuersignal in einen elektrischen Impuls für den Stellmagneten 46 umsetzenden Steuermodul verbunden sein. Die Funkverbindung kann beispielsweise über Bluetooth erfolgen.

**Liste der Bezugszeichen**

| | | | |
|---|---|---|---|
| 1 | Kraftfahrzeugaufbau | 29 | Tasche |
| 2 | Schwenktür | 30 | Stirnfläche |
| 3 | Scharnier | 31 | Steuerschräge |
| 4 | Drehstangenverschluss | 32 | Gegenrastfläche |
| 5 | Drehstange | 33 | Fläche |
| 6 | Decke | 34 | Einwirkungsabschnitt |
| 7 | Drehriegel | 35 | Stirnfläche |
| 8 | Aufnahmetasche | 36 | Brückenabschnitt |
| 9 | Hebelteil | 37 | Durchgreiföffnung |
| 10 | Grundplatte | 38 | Öffnung |
| 11 | Rahmenelement | 39 | Blockierteil |
| 12 | Schraubbolzen | 40 | Befestigungslasche |
| 13 | Gegenrast | 41 | Blockierbolzen |
| 14 | Rastvorsprung | 42 | Öffnung |
| 15 | Rastfläche | 43 | Durchbrechung |
| 16 | Sockelbereich | 44 | Blockierausnehmung |
| 17 | Betätigungshebel | 45 | Feder |
| 18 | Drehachse | 46 | Stellmagnet |
| 19 | Riegelfortsatz | 47 | Fernbetätigungseinrichtung |
| 20 | Anlagezapfen | 48 | Funkfernbedienung |
| 21 | Sperrvorsprung | 49 | Sender |
| 22 | Sperrteil | 50 | Empfänger |
| 23 | Wandung | | |
| 24 | Abdeckung | | |
| 25 | Feder | | |
| 26 | Schulter | b | Abstand |
| 27 | Stützabschnitt | c | Abstand |
| 28 | Steuerabschnitt | d | Abstand |
| e | Verschiebeweg | | |
| r | Verlagerungsrichtung | | |
| x | Drehachse | | |
| y | Drehachse | | |
| z | Achse | | |
| A | Richtung | | |
| L | Längsrichtung | | |

## Patentansprüche

1. Mit einem Drehstangenverschluss (4), insbesondere für Schwenktüren (2), ausgebildeter Kraftfahrzeugaufbau (1), wobei der Drehstangenverschluss (4) in einer Verschlussstellung über ein mechanisches Blockierteil (39) sicherbar ist, welches Blockierteil (39) zwischen einer Blockierstellung und einer Freigabestellung bewegbar ist, wobei weiter der Drehstangenverschluss (4) eine eine zugeordnete Schwenktür (2) vertikal drehgeführt durchragende Drehstange (5) aufweist, die im Bereich einer Decke (6) des Kraftfahrzeugaufbaus (1) in einen Drehriegel (7) übergeht, der mit der Drehstange (5) drehfest verbunden ist und verschließend in einer Aufnahmetasche (8) im Bereich der Decke (6) des Kraftfahrzeugaufbaus (1) verschließend eingreift, wobei weiter die Drehbetätigung der Drehstange (5) über ein Hebelteil (9) erreicht ist, das unterhalb eines Ladebodens des Kraftfahrzeugaufbaus (1), am unteren Ende der Drehstange (5) angeordnet ist und im Verschlusszustand mit einer Grundplatte (10) verrastet, wobei die Grundplatte (10) türaußenseitig an einem aufbauseitigen Rahmenelement (11) des Kraftfahrzeugaufbaus (1) befestigt ist, wobei weiter die Grundplatte (10) Teil einer in der Raststellung des Drehstangenverschlusses (4) mit dem Hebelteil (9) zusammenwirkender Gegenrast (13) ist, wobei ein in der Raststellung wirksamer Rastvorsprung (14) der Gegenrast (13) mit dessen wirksamen, in der Raststellung übergriffenen Rastfläche (15) in Richtung auf das Rahmenelement (11) weist, wobei weiter die Rastfläche (15) im Wesentlichen in einer Richtung (A) senkrecht zu dem Rahmenelement (11) bzw. der im Befestigungsbereich an dem Rahmenelement (11) im Wesentlichen flächig und plattenartig ausgebildeten Grundplatte (10) zu der zugewandten Außenfläche des Rahmenelementes (11) sowie auch der Grundplatte (10) beabstandet ist, wobei das Hebelteil (9) eine Sockelbereich (16) und einen Betätigungshebel (17) aufweist, wobei darüber hinaus in dem Sockelbereich (16) ein in Längsrichtung (L) des Hebelteils (9) schiebeverlagerbarer Sperrvorsprung (21) angeordnet ist, der Teil eines in dem Sockelbereich (16) geführten Sperrteils (22) ist, **dadurch gekennzeichnet, dass** das Sperrteil (22) durch das Blockierteil (39) in der Raststellung blockierbar ist und dass das Blockierteil (39) über eine Fernbetätigungseinrichtung (47), die eine Betätigung des Blockierteils (39) ohne einen von Hand-Eingriff auf das Blockierteil (39) ermöglichen lässt, betätigbar ist.

2. Kraftfahrzeugaufbau nach Anspruch 1, **dadurch gekennzeichnet, dass** das Blockierteil (39) motorisch betätigbar ist.

3. Kraftfahrzeugaufbau nach einem der vorhergehenden Ansprüche,
**dadurch gekennzeichnet, dass** die Fernbetätigungseinrichtung (47) als elektrische Schalteinrichtung ausgebildet ist.

4. Kraftfahrzeugaufbau nach einem der vorhergehenden Ansprüche,
**dadurch gekennzeichnet, dass** die Fernbetätigungseinrichtung (47) als Funkfernbedienung (48) ausgebildet ist.

5. Kraftfahrzeugaufbau nach einem der vorhergehenden Ansprüche,
**dadurch gekennzeichnet, dass** die Fernbetätigungseinrichtung (47) als mechanische Einrichtung, beispielsweise als Bowdenzug, ausgebildet ist.

6. Kraftfahrzeugaufbau nach einem der vorhergehenden Ansprüche,
**dadurch gekennzeichnet, dass** die Gegenrast (13) aufbaufest ist,wobei der Sperrvorsprung (21) verschiebbar an dem Hebelteil (9) angeordnet ist, wobei der Betätigungshebel (17) um eine in dem Hebelteil (9) ausgebildete Drehachse (18) verschwenkbar ist, wobei der Betätigungshebel (17) einen Einwirkungsabschnitt (34) aufweist, zum Verschieben des Sperrvorsprungs (21), dass der Einwirkungsabschnitt (34) bezüglich der Drehachse (18) auf einer von dem Aufbau (1) des Kraftfahrzeugs abgewandten Seite angeordnet sowie zu dem Aufbau (1) beabstandet ist und dass der Einwirkungsabschnitt (34) den Sperrvorsprung (21) bei Betätigung von der Drehachse (18) wegzubewegen sucht.

7. Kraftfahrzeugaufbau nach einem der vorhergehenden Ansprüche,
**dadurch gekennzeichnet, dass** der Sperrvorsprung (21) unter einer Abdeckung (24) des Hebelteils (9) angeordnet ist.

8. Kraftfahrzeugaufbau nach Anspruch 7, **dadurch gekennzeichnet, dass** der Sperrvorsprung (21) über einen gesamten Verschiebeweg (e) von der Abdeckung (24) überdeckt ist.

9. Kraftfahrzeugaufbau nach Anspruch 7 oder 8, **dadurch gekennzeichnet, dass** die Gegenrast (13) in der unbetätigten und/ oder betätigten Stellung von der Abdeckung (24) überdeckt ist.

10. Kraftfahrzeugaufbau nach Anspruch 9, **dadurch gekennzeichnet, dass** die Gegenrast (13) in der unbetätigten und/oder betätigten Stellung auf der von dem Aufbau (1) abgewandten Seite der Drehhachse (18) von dem Einwirkungsabschnitt (34) überdeckt ist.

11. Kraftfahrzeugaufbau nach einem der vorhergehenden Ansprüche,
**dadurch gekennzeichnet, dass** das Blockierteil (39) aufbaufest ist.

12. Kraftfahrzeugaufbau nach einem der vorhergehenden Ansprüche,
**dadurch gekennzeichnet, dass** ein Blockierbolzen (41) des Blockierteils (39) eine Öffnung (42) in einem Rahmenelement (11) sowie eine entsprechend positionierte Durchbrechung (43) in der Grundplatte (10) durchsetzt und in der Blockierstellung in eine beispielsweise topfartige Blockierausnehmung (44) des Sperrteils (22) eintaucht.

13. Kraftfahrzeugaufbau nach Anspruch 12, **dadurch gekennzeichnet, dass** der Blockierbolzen (41) des Blockierteils (39) beispielsweise durch eine Feder (45) die sich aufbauseitig abstützt, in die Blockierstellung belastet ist.

## Claims

1. Vehicle body (1) configured with a rotary rod lock (4), in particular for swing doors (2), wherein the rotary rod lock (4) can be secured in a closed position via a mechanical blocking part (39), which blocking part (39) is movable between a blocking position and a release position, wherein the rotary rod lock (4) further comprises a rotary rod (5) passing through an associated swing door (2) in a vertically rotationally guided manner, which rotary rod (5) transitions in the region of a roof (6) of the vehicle body (1) into a rotary latch (7) which is connected to the rotary rod (5) in a rotationally fixed manner and engages in a closing manner into a receiving pocket (8) in the region of the roof (6) of the vehicle body (1), wherein the rotational actuation of the rotary rod (5) is further achieved via a lever part (9) which is arranged below a loading floor of the vehicle body (1) at the lower end of the rotary rod (5) and latches with a base plate (10) in the closed state, wherein the base plate (10) is fastened on the door exterior to a frame element (11) of the vehicle body (1) on the body side, wherein the base plate (10) is further part of a counter-catch (13) cooperating with the lever part (9) in the latched position of the rotary rod lock (4), wherein a latching projection (14) of the counter-catch (13) effective in the latched position points with its effective latching surface (15), which is overlapped in the latched position, toward the frame element (11), wherein the latching surface (15) is further spaced apart from the facing outer surface of the frame element (11) as well as the base plate (10) substantially in a direction (A) perpendicular to the frame element (11) or the base plate (10), which is configured substantially flat and plate-like in the fastening region on the frame element (11), wherein the lever part (9) comprises a base region (16) and an actuating lever (17), wherein furthermore a locking projection (21) displaceable in the longitudinal direction (L) of the lever part (9) is arranged in the base region (16), which locking projection (21) is part of a locking part (22) guided in the base region (16), **characterized in that** the locking part (22) can be blocked by the blocking part (39) in the latched position and that the blocking part (39) is actuatable via a remote control device (47) which allows an actuation of the blocking part (39) without manual intervention on the blocking part (39).

2. Vehicle body according to claim 1, **characterized in that** the blocking part (39) is motor-actuatable.

3. Vehicle body according to one of the preceding claims, **characterized in that** the remote control device (47) is configured as an electrical switching device.

4. Vehicle body according to one of the preceding claims, **characterized in that** the remote control device (47) is configured as a radio remote control (48).

5. Vehicle body according to one of the preceding claims, **characterized in that** the remote control device (47) is configured as a mechanical device, for example as a Bowden cable.

6. Vehicle body according to one of the preceding claims, **characterized in that** the counter-catch (13) is fixed to the body, wherein the locking projection (21) is arranged displaceably on the lever part (9), wherein the actuating lever (17) is pivotable about an axis of rotation (18) formed in the lever part (9), wherein the actuating lever (17) comprises an acting section (34) for displacing the locking projection (21), that the acting section (34) is arranged with respect to the axis of rotation (18) on a side facing away from the body (1) of the motor vehicle and is spaced apart from the body (1), and that the acting section (34) tends to move the locking projection (21) away from the axis of rotation (18) upon actuation.

7. Vehicle body according to one of the preceding claims, **characterized in that** the locking projection (21) is arranged under a cover (24) of the lever part (9).

8. Vehicle body according to claim 7, **characterized in that** the locking projection (21) is covered by the cover (24) over an entire displacement path (e).

9. Vehicle body according to claim 7 or 8, **characterized in that** the counter-catch (13) is covered by the cover (24) in the unactuated and/or actuated position.

10. Vehicle body according to claim 9, **characterized in that** the counter-catch (13) is covered by the acting section (34) in the unactuated and/or actuated position on the side of the axis of rotation (18) facing away from the body (1).

11. Vehicle body according to one of the preceding claims, **characterized in that** the blocking part (39) is fixed to the body.

12. Vehicle body according to one of the preceding claims, **characterized in that** a blocking bolt (41) of the blocking part (39) passes through an opening (42) in a frame element (11) as well as a correspondingly positioned through-hole (43) in the base plate (10) and engages into a, for example, pot-like blocking recess (44) of the locking part (22) in the blocking position.

13. Vehicle body according to claim 12, **characterized in that** the blocking bolt (41) of the blocking part (39) is biased into the blocking position, for example by a spring (45) which is supported on the body side.

## Revendications

1. Carrosserie de véhicule automobile (1) configurée avec une fermeture à crémone (4), en particulier pour des portes battantes (2), dans laquelle la fermeture à crémone (4) peut être sécurisée dans une position de fermeture par l'intermédiaire d'un élément de blocage (39) mécanique, lequel élément de blocage (39) est mobile entre une position de blocage et une position de libération, dans laquelle en outre la fermeture à crémone (4) présente une barre de crémone (5) traversant une porte battante (2) associée de manière guidée en rotation verticalement, laquelle barre de crémone (5) effectue une transition, dans la zone d'un toit (6) de la carrosserie de véhicule automobile (1), en un verrou rotatif (7) qui est relié de manière solidaire en rotation à la barre de crémone (5) et s'engage de manière fermante dans une poche de réception (8) dans la zone du toit (6) de la carrosserie de véhicule automobile (1), dans laquelle en outre l'actionnement en rotation de la barre de crémone (5) est obtenu par l'intermédiaire d'un élément de levier (9) qui est disposé au-dessous d'un plancher de chargement de la carrosserie de véhicule automobile (1), à l'extrémité inférieure de la barre de crémone (5), et s'encliquette avec une plaque de base (10) à l'état fermé, dans laquelle la plaque de base (10) est fixée côté extérieur de la porte à un élément de cadre (11) côté carrosserie de la carrosserie de véhicule automobile (1), dans laquelle en outre la plaque de base (10) fait partie d'un contre-cran (13) coopérant avec l'élément de levier (9) dans la position d'encliquetage de la fermeture à crémone (4), dans laquelle une saillie d'encliquetage (14) du contre-cran (13) efficace dans la position d'encliquetage est orientée avec sa surface d'encliquetage (15) efficace, recouverte dans la position d'encliquetage, en direction de l'élément de cadre (11), dans laquelle en outre la surface d'encliquetage (15) est espacée, sensiblement dans une direction (A) perpendiculaire à l'élément de cadre (11) ou à la plaque de base (10) configurée de manière sensiblement plane et en forme de plaque dans la zone de fixation sur l'élément de cadre (11), de la surface extérieure en regard de l'élément de cadre (11) ainsi que de la plaque de base (10), dans laquelle l'élément de levier (9) présente une zone de socle (16) et un levier d'actionnement (17), dans laquelle en outre une saillie de verrouillage (21) mobile par coulissement dans la direction longitudinale (L) de l'élément de levier (9) est disposée dans la zone de socle (16), laquelle fait partie d'un élément de verrouillage (22) guidé dans la zone de socle (16), **caractérisée en ce que** l'élément de verrouillage (22) peut être bloqué par l'élément de blocage (39) dans la position d'encliquetage et **en ce que** l'élément de blocage (39) peut être actionné par l'intermédiaire d'un dispositif d'actionnement à distance (47) qui permet un actionnement de l'élément de blocage (39) sans intervention manuelle sur l'élément de blocage (39).

2. Carrosserie de véhicule automobile selon la revendication 1, **caractérisée en ce que** l'élément de blocage (39) peut être actionné de manière motorisée.

3. Carrosserie de véhicule automobile selon l'une des revendications précédentes, **caractérisée en ce que** le dispositif d'actionnement à distance (47) est configuré comme un dispositif de commutation électrique.

4. Carrosserie de véhicule automobile selon l'une des revendications précédentes, **caractérisée en ce que** le dispositif d'actionnement à distance (47) est configuré comme une télécommande radio (48).

5. Carrosserie de véhicule automobile selon l'une des revendications précédentes, **caractérisée en ce que** le dispositif d'actionnement à distance (47) est configuré comme un dispositif mécanique, par exemple comme un câble Bowden.

6. Carrosserie de véhicule automobile selon l'une des revendications précédentes, **caractérisée en ce que** le contre-cran (13) est solidaire de la carrosserie, dans laquelle la saillie de verrouillage (21) est disposée de manière coulissante sur l'élément de levier (9), dans laquelle le levier d'actionnement (17) est pivotant autour d'un axe de rotation (18) formé dans l'élément de levier (9), dans laquelle le levier d'actionnement (17) présente une section d'action (34) pour faire coulisser la saillie de verrouillage (21), **en ce que** la section d'action (34) est disposée par rapport à l'axe de rotation (18) sur un côté opposé à la carrosserie (1) du véhicule automobile et est espacée de la carrosserie (1), et **en ce que** la section d'action (34) tend à éloigner la saillie de verrouillage (21) de l'axe de rotation (18) lors de l'actionnement.

7. Carrosserie de véhicule automobile selon l'une des revendications précédentes, **caractérisée en ce que** la saillie de verrouillage (21) est disposée sous un capot (24) de l'élément de levier (9).

8. Carrosserie de véhicule automobile selon la revendication 7, **caractérisée en ce que** la saillie de verrouillage (21) est recouverte par le capot (24) sur l'ensemble d'une course de déplacement (e).

9. Carrosserie de véhicule automobile selon la revendication 7 ou 8, **caractérisée en ce que** le contre-cran (13) est recouvert par le capot (24) dans la position non actionnée et/ou actionnée.

10. Carrosserie de véhicule automobile selon la revendication 9, **caractérisée en ce que** le contre-cran (13) est recouvert par la section d'action (34) dans la position non actionnée et/ou actionnée sur le côté de l'axe de rotation (18) opposé à la carrosserie (1).

11. Carrosserie de véhicule automobile selon l'une des revendications précédentes, **caractérisée en ce que** l'élément de blocage (39) est solidaire de la carrosserie.

12. Carrosserie de véhicule automobile selon l'une des revendications précédentes, **caractérisée en ce qu'**un axe de blocage (41) de l'élément de blocage (39) traverse une ouverture (42) dans un élément de cadre (11) ainsi qu'un évidement (43) positionné de manière correspondante dans la plaque de base (10) et s'immerge, dans la position de blocage, dans un logement de blocage (44), par exemple en forme de pot, de l'élément de verrouillage (22).

13. Carrosserie de véhicule automobile selon la revendication 12, **caractérisée en ce que** l'axe de blocage (41) de l'élément de blocage (39) est sollicité dans la position de blocage, par exemple par un ressort (45) qui prend appui côté carrosserie.
